## Europäisches Patentamt

## European Patent Office

## Office européen des brevets

(11) Numéro de publication: **0 193 236**
**B1**

## (12) FASCICULE DE BREVET EUROPÉEN

(45) Date de publication du fascicule du brevet:
**06.12.89**

(51) Int. Cl.⁴: **G 02 B 23/12,** G 02 B 23/08

(21) Numéro de dépôt: **86200246.6**

(22) Date de dépôt: **19.02.86**

(54) **Appareil d'observation mixte jour-nuit à grand champ.**

(30) Priorité: **22.02.85 FR 8502576**

(43) Date de publication de la demande:
**03.09.86 Bulletin 86/36**

(45) Mention de la délivrance du brevet:
**06.12.89 Bulletin 89/49**

(84) Etats contractants désignés:
**BE DE FR GB IT NL SE**

(56) Documents cité:
**DE-A-2 704 185**
**DE-A-2 704 186**
**DE-B-1 220 165**
**DE-B-2 054 387**
**FR-A-2 337 326**
**GB-A-544 217**
**GB-A-1 045 422**
**US-A-3 140 339**
**US-A-3 549 231**

(73) Titulaire: **TELECOMMUNICATIONS RADIOELECTRIQUES ET TELEPHONIQUES T.R.T., 88, rue Brillat Savarin, F-75013 Paris (FR)**

(84) Etats contractants désignés: **FR**

(73) Titulaire: **N.V. Philips' Gloeilampenfabrieken, Groenewoudseweg 1, NL- 5621 BA Eindhoven (NL)**

(84) Etats contractants désignés: **BE DE GB IT NL SE**

(72) Inventeur: **Loy, Fernand SOCIETE CIVILE S.P.I.D., 209 rue de l'Université, F-75007 Paris (FR)**
Inventeur: **Espie, Jean- Luc SOCIETE CIVILE S.P.I.D., 209 rue de l'Université, F-75007 Paris (FR)**

(74) Mandataire: **Pyronnet, Jacques, Société Civile S.P.I.D. 209 rue de l'Université, F-75007 Paris (FR)**

## Description

L'invention concerne un appareil d'observation mixte jour-nuit pour véhicule, contenu dans un boîtier unique, comportant un premier réflecteur d'entrée mobile respectivement un deuxième réflecteur d'entrée pour dévier les rayons lumineux d'entrée issus du champ de vision dans la direction de l'axe optique de la voie de nuit respectivement de la voie de jour, la voie de nuit étant constituée par un objectif, un tube intensificateur de lumière et un oculaire coudé, la voie de jour étant constituée par un système optique de grossissement 1 comportant au moins un deuxième réflecteur de sortie.

En tant qu'appareil d'observation, l'appareil selon l'invention est tel que le grossissement est égal à 1 pour la voie de jour et de l'ordre de 1 pour la voie de nuit. Pour les deux voies, on s'efforce d'obtenir le champ de vision le plus large possible. A travers ce type d'appareil qui est monté à travers la paroi d'un véhicule, de préférence à travers le blindage d'un véhicule blindé, la vision est périscopique. L'invention s'applique notamment à un épiscope destiné à la conduite d'un char de combat.

Des certificats d'utilité français 2 377 647 et 2 377 648 on connaît un appareil de visée de jour et de nuit, c'est-à-dire un appareil optique périscopique contenu dans un boîtier unique pouvant fonctionner pour tous les degrés d'éclairage de l'objectif observé, aussi bien sous un soleil éclatant que de nuit par temps couvert. Lorsqu'un tel appareil est monté dans un véhicule blindé, il peut consister en un ensemble hermétique pouvant s'adapter dans l'ouverture normalisée prévue jusqu'alors, pour recevoir aussi bien des dispositifs de visée de nuit que des dispositifs de visée de jour. Ces caractéristiques techniques et ces fonctions sont aussi recherchées au départ pour l'appareil d'observation décrit ci-dessous. Il est en effet très désavantageux dans les deux cas d'utiliser des appareils optiques amovibles et distincts pour le jour et pour la nuit notamment à cause de la nécessité d'une part de procéder à des opérations de commutation, pendant lesquelles la vision à travers l'appareil optique n'est plus possible, d'autre part de devoir ranger l'appareil inutilisé sans risque d'endommagement de ce dernier ni d'encombrement de l'habitacle du véhicule qui est exigu.

Le compactage en un seul boîtier de dimensions normalisées est relativement facile à obtenir dans un appareil de visée pour lequel les champs de visée sont étroits, de l'ordre de 5° à 10° et pour lequel les grossissement obtenus sont forts, de l'ordre de 5 à 10, le véhicule muni de l'appareil de visée étant normalement à l'arrêt lors de la visée. Par contre l'observation particulièrement pour la conduite d'un véhicule doit s'effectuer à vision normale, c'est-à-dire pour un grandissement faible égal ou sensiblement égal à 1 ce qui, il est vrai, va dans le sens d'un champ de vision large, mais, comme déjà indiqué ci-dessus, on souhaite dans ce cas un champ de vision le plus large possible et il faut veiller à ce que le compactage obtenu du fait de réunir dans un même boîtier un appareil d'observation de jour et un appareil d'observation de nuit ne s'accompagne pas d'une diminution du champ de vision.

L'invention a pour but de réaliser un appareil d'observation mixte jour-nuit à grand champ et à vision bioculaire contenu dans un boîtier unique pouvant s'adapter dans une ouverture aussi réduite que possible à travers la paroi du véhicule porteur.

Un autre but de l'invention est de réaliser les adaptations nécessaires à la combinaison en un boîtier unique d'un appareil d'observation de jour et d'un appareil d'observation de nuit.

Encore un autre but de l'invention est de permettre l'élargissement du champ en gisement pour la vision de nuit en rendant mobile la voie de nuit à l'intérieur dudit boîtier unique.

Encore un autre but de l'invention est de permettre la mise en place dans ledit appareil d'un dispositif de visualisation d'ordres de conduite dudit véhicule qui soit commun aux voies de jour et de nuit.

Ces buts sont atteints et les inconvénients de l'art antérieur sont atténués ou supprimés grâce au fait que l'appareil d'observation défini en préambule est remarquable en ce que les axes optiques de la voie de jour et de la voie de nuit s'étendent dans un même plan parallèle à un axe longitudinal dudit véhicule, et que ledit premier réflecteur d'entrée ainsi que ledit deuxième réflecteur de sortie sont escamotables alternativement par manipulation du deuxième réflecteur de sortie qui comporte des deuxièmes moyens d'escamotage de façon telle que pour l'observation de nuit ledit premier réflecteur d'entrée soit, en position active, situé devant ledit deuxième réflecteur d'entrée, le deuxième réflecteur de sortie étant en position escamotée, et que pour l'observation de jour ledit deuxième réflecteur de sortie soit, en position active, situé derrière ledit oculaire coudé, le premier réflecteur d'entrée étant en position escamotée.

De préférence, les axes optiques de la voie de jour et de la voie de nuit sont inclinés l'un vers l'autre vers le haut d'un léger angle, ce qui est rendu possible du fait que l'objectif de la voie de nuit a un diamètre plus faible que le tube intensificateur de lumière sous-jacent, ce qui diminue l'encombrement de l'appareil d'observation notamment vers le haut, à l'endroit où ledit appareil doit traverser la paroi ou le blindage.

Du brevet GB-1 045 422 on connaît un télescope jour-nuit contenu dans un boîtier unique, dans lequel sont prévus deux miroirs escamotables simultanément pour passer de la voie de jour à la voie de nuit et réciproquement. Dans ce télescope, prévu pour obtenir des grandissements nettement supérieurs à 1 en association avec des champs d'observation étroits, le système optique de la voie de jour est constitué par un ensemble de lentilles, ce qui entraîne une vision différente devant l'oculaire par rapport à un système à miroirs ou à prismes.

La demande de brevet FR-A-2 337 326 montre, à la figure 1, un appareil d'observation et de visée mixte jour-nuit dont les axes optiques de la voie de jour et de la voie de nuit s'étendent dans un même plan parallèle à un axe longitudinal du véhicule porteur.

Dans l'appareil d'observation selon l'invention, la mise en service de la voie de nuit engendre, à partir du tube intensificateur de lumière des rayons lumineux qui se reflètent notamment sur le visage de l'observateur. Du fait de l'association dans un même boîtier des deux systèmes de vision jour et nuit, ces rayons lumineux reflétés peuvent, au moins pour partie, traverser de l'intérieur vers l'extérieur du véhicule le système d'observation de jour, ce qui signalerait le véhicule à un observateur étranger, chose que l'on souhaite éviter. Pour cette raison, l'appareil d'observation mixte jour-nuit selon l'invention peut être remarquable en ce qu'il comporte des moyens de mise en service automatiques dudit tube intensificateur de lumière ainsi que des moyens d'obturation automatiques de la voie de jour consistant en un volet d'étanchéité articulé sur ledit boîtier et sollicité par un ressort hors du trajet de rayons lumineux lorsque ledit deuxième réflecteur de sortie est en position active et perpendiculairement audit axe optique de la voie de jour dans le trajet du rayonnement lumineux lorsque ledit deuxième réflecteur de sortie est en position escamotée.

Grâce à la disposition adoptée selon l'invention pour l'agencement de la partie optique pour les voies de jour et de nuit, particulièrement le fait de disposer l'un derrière l'autre deux réflecteurs d'entrée parmi lesquels le réflecteur de la voie de nuit de dimension réduite situé à l'avant est escamotable, il devient possible d'obtenir un mode de réalisation avantageux de l'invention, remarquable en ce que la voie de nuit, munie dudit premier réflecteur d'entrée, est manoeuvrable selon un mouvement de rotation, autour de son axe optique, limité à quelques dizaines de degrés de part et d'autre d'une position frontale médiane, et qu'à cet effet elle est montée à rotation dans le corps et comporte un levier de manoeuvre.

Un autre agencement avantageux de la partie optique est la présence du deuxième réflecteur de sortie, en position active, derrière ledit oculaire coudé de la voie de nuit, cette disposition particulière permettant d'obtenir un mode de réalisation de l'invention remarquable en ce que ledit oculaire coudé ainsi que le deuxième réflecteur de sortie comportent chacun un prisme à face semi-réfléchissante et que ledit appareil comporte un dispositif de visualisation d'ordres de conduite dudit véhicule, intégré audit bioculaire, commun aux voies de jour et de nuit, constitué par un ensemble de diodes électroluminescentes définissant les symboles d'ordres de conduite, ledit ensemble étant situé dans un plan conjugué du plan focal de l'oculaire, l'injection dans le champ de l'oculaire étant réalisée au moyen d'un prisme collé sur la face semi-réfléchissante du prisme de renvoi du bioculaire et au moyen d'un prisme de section triangulaire collé sur la face semi-réfléchissante du prisme qui constitue ledit deuxième réflecteur de sortie.

La description qui suit en regard des dessins annexés, le tout donné à titre d'exemple fera bien comprendre comment l'invention peut être réalisée.

La figure 1 est une vue latérale en élévation en coupe du boîtier et de la partie optique d'un appareil d'observation selon l'invention.

Les figures 2a et 2b représentent schématiquement respectivement en vue latérale en élévation en coupe et en vue arrière en élévation boîtier enlevé, l'appareil en position d'observation de jour.

Les figures 3a et 3b représentent selon les mêmes vues respectives que celles des figures 2a et 2b, l'appareil en position d'observation de nuit.

Sur les différentes figures les mêmes références désignent les mêmes éléments avec les mêmes fonctions.

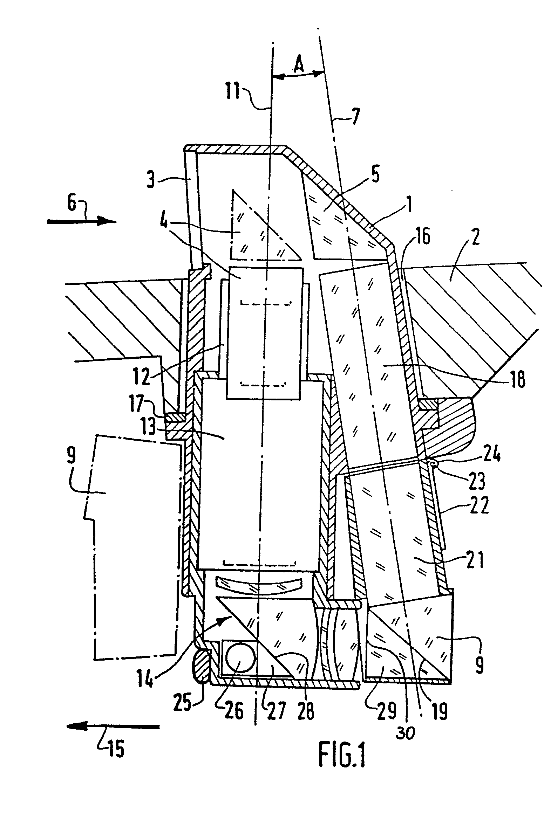

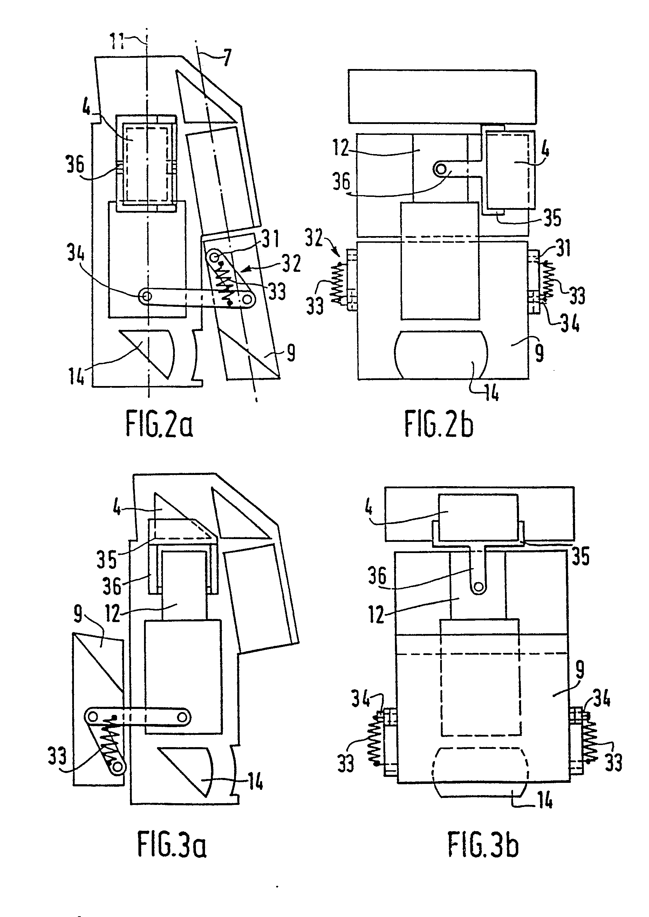

L'appareil d'observation représenté à la figure 1 comporte un boîtier 1 disposé à travers la paroi 2 d'un véhicule, de préférence blindé, de façon telle que la partie supérieure fermée par le hublot 3 de l'appareil dépasse, à l'extérieur de la paroi (du blindage) 2. La partie supérieure comporte deux réflecteurs d'entrée disposés l'un derrière l'autre. Le premier réflecteur d'entrée 4, utilisé pour l'observation de nuit est mobile de façon à pouvoir occuper deux positions stables; sur la figure 1 il est représenté en trait plein en position escamotée et en trait mixte en position active. Le deuxième réflecteur d'entrée 5 utilisé pour l'observation de nuit est monté fixe contre le boîtier à l'arrière de la partie supérieure. Les réflecteurs 4 et 5 servent à dévier les rayons lumineux d'entrée issus du champ de vision et symbolisés par une flèche 6, selon deux directions sensiblement perpendiculaires toutes deux à la paroi 2. De préférence, les réflecteurs 4 et 5 sont des prismes de section triangulaire à réflexion totale, il pourrait aussi s'agir de miroirs. Dans la position d'observation de jour représentée en trait plein, les rayons lumineux sont, après réflexion sur le réflecteur 5 dirigés selon un axe optique 7, dit axe optique de la voie de jour, la voie de jour étant constituée par un système optique à grossissement 1 à prismes ou à miroirs' comportant au moins un deuxième réflecteur de sortie 9. Lorsque le premier réflecteur 4 est dans sa position active représentée en trait mixte à la figure 1, les rayons lumineux d'entrée sont, après réflexion, dirigés selon un axe optique 11, dit axe optique de la voie de nuit, le long duquel s'étendent un objectif 12, un tube intensificateur de lumière 13 et un oculaire coudé 14 qui est de préférence un bioculaire. Les axes optiques 7 et 11 s'étendent dans un même plan parallèle à un axe longitudinal 15 du véhicule blindé, ce plan étant en l'occurrence celui de la figure 1. Le premier réflecteur d'entrée 4 et le deuxième réflecteur de sortie 9 comportent respectivement des premiers et deuxièmes moyens d'escamotage, alternés, commandables par manipulation du deuxième réflecteur de sortie 9, dont un mode de réalisation est décrit ci-dessous en référence aux figures 2 et 3. Ces moyens d'escamotage alternés sont conçus de telle façon que lorsque l'un quelconque parmi le premier réflecteur d'entrée et le deuxième réflecteur de sortie est en position active l'autre soit en position escamotée. Pour l'observation de jour le deuxième réflecteur de sortie 9 occupe sa position active représentée en trait plein, derrière l'oculaire coudé 14 de la voie de nuit et le premier réflecteur d'entrée sa position escamotée, par exemple telle que représentée en trait plein, à côté de l'objectif 12. Pour l'observation de nuit, qui s'obtient du fait de saisir le deuxième réflecteur de sortie 9 dans sa position active et de le faire passer à sa position escamotée par exemple telle que représentée en trait mixte à la figure 1 contre le boîtier 1 de l'appareil d'observation devant le tube intensificateur de lumière 13, le premier réflecteur d'entrée 4 occupe sa position active, représentée en trait mixte, devant le deuxième réflecteur d'entrée 5. Pour le passage de la position de jour à la position de nuit, ou l'inverse, c'est le mouvement même du deuxième réflecteur de sortie 9 qui déclenche le mouvement du premier réflecteur d'entrée 4 de l'une à l'autre de ses deux positions stables.

Le boîtier de l'appareil d'observation est glissé à travers un orifice 16 de la paroi 2 et un joint d'étanchéité 17 disposé entre un épaulement du boîtier et la paroi permet de rendre l'ensemble hermétique. Le mode de fixation de l'appareil, d'un type classique, n'est pas représenté, ni décrit.

Le système optique de la voie de jour représenté à la figure 1 est constitué par trois prismes, le prisme d'entrée 5 déjà décrit, un prisme intermédiaire 18 de forme parallélépipédique et un prisme de sortie constituant le deuxième réflecteur de sortie 9 qui peut être à réflexion totale mais dont la face réflectrice 19 est de préférence semi-transparente. De préférence, le prisme 9 est prolongé, en direction du prisme 18, par un prisme 21 de forme parallélépipédique auquel il est collé. L'indice de réfraction du verre utilisé pour les prismes 5, 18, 21 et 9 est élevé, de l'ordre de 1,6, ce qui, pour une section donnée disponible pour la voie de jour à travers l'ouverture 16, permet d'obtenir un grand champ.

L'objectif 12 de la voie de nuit s'inscrit dans un cylindre dont le diamètre est inférieur à celui du tube intensificateur de lumière. Cette disposition permet d'accroître le compactage de l'appareil en inclinant l'un vers l'autre vers le haut d'un léger angle les axes optiques de la voie de jour 7 et de la voie de nuit 11. Sur les figures, cet angle A est compris entre 10° et 20°.

Lorsque l'appareil d'observation est en position de nuit comme décrit ci-dessous en référence aux figures 3a et 3b l'ensemble constitué par les prismes 9 et 21 est escamoté et l'espace qui environne l'oculaire coudé 14, derrière cet oculaire est dégagé pour permettre l'observation à travers cet oculaire. Il serait alors possible que la lumière en provenance de l'intérieur du véhicule blindé et en particulier la lumière issue du tube intensificateur de lumière 13 et reflétée par le visage de l'observateur traverse de l'intérieur vers l'extérieur les prismes 18 et 5 de la voie de jour. Même si ce reflet lumineux est faible, il peut être suffisant pour signaler la présence du véhicule à un observateur étranger dans les parages du véhicule. Pour cette raison on prévoit, de préférence, la mise en service automatique d'un obturateur de la voie de jour lors du passage de l'observation de jour à l'observation de nuit. Dans le mode de réalisation représenté à la figure 1, cette obturation est effectuée au moyen d'un volet obturateur 22, articulé autour d'un axe 23 solidaire du boîtier 1. En position nuit, inverse de celle représentée à la figure 1, le volet 22 est sollicité par un ressort 24 contre la face inférieure du prisme intermédiaire 18, c'est-à-dire dans le trajet du rayonnement lumineux perpendiculairement à l'axe optique 7 de la voie de jour. Lors du passage à la position d'observation de jour, il est nécessaire de relever, par exemple manuellement, le volet obturateur 22 avant de placer le deuxième réflecteur de sortie 9, 21 dans son logement en position active telle que représentée sur la figure 1. Le volet 22 se referme alors sur l'ensemble de prismes 9, 21, sous l'action du ressort 24, contribuant ainsi à sa stabilité. Dans cette dernière position le volet 22 est mis hors du trajet des rayons lumineux qui traversent la voie de jour.

De préférence, l'ensemble des éléments optiques 4, 12, 13 et 14 qui constituent la voie de nuit sont montés à rotation dans le boîtier 1. Au moyen de paliers d'un type connu non représentés qui se situent au niveau du tube intensificateur de lumière 13 il est prévu de faire tourner l'ensemble de quelques dizaines de degrés selon l'un ou l'autre sens de rotation autour de l'axe optique 11 de la voie de nuit, qui en l'occurrence est vertical, de part et d'autre d'une position frontale médiane; à cet effet, il est prévu un levier d'orientation en gisement 25 représenté coupé sur la figure 1. Ce levier, qui peut se replier sous le bioculaire coudé 14 au moyen d'une articulation non représentée, permet d'orienter en gisement la voie de nuit par exemple de plus ou moins 25° par bonds de 5°, un billage, effectué de façon connue en soi, assurant son maintien en position. On peut prévoir que la position repliée du levier 25, en fonctionnement de jour immobilise la voie de nuit en position médiane, telle que représentée sur la figure 1. A titre de variante la voie de nuit peut être entraînée en rotation par un moteur électrique et son mouvement de rotation asservi aux mouvements du volant du véhicule ou de la tête de l'observateur. La voie de nuit qui présente par exemple un champ instantané vertical de 40° et un champ instantané horizontal de 50° voit ainsi son champ horizontal total élargi à 100° grâce à la rotation de la voie de nuit, le grossissement de la voie de nuit étant compris entre 0,9 et 1.

La conception de l'appareil d'observation décrite ci-dessus permet la visualisation d'ordres de conduite au moyen d'un dispositif unique commun à la voie de jour et à la voie de nuit, l'observateur étant en l'occurrence le pilote du véhicule. Ce dispositif 26, intégré au bioculaire de la voie de nuit, est constitué d'un ensemble de diodes électroluminescentes, de préférence rouges, définissant les symboles d'ordres de conduite, tels que des flèches de différentes directions, cet ensemble étant situé dans un plan conjugué du plan focal de l'oculaire. L'injection dans le champ de l'oculaire des symboles lumineux est réalisée au moyen d'un prisme à sept faces 27, muni d'une lentille, collé sur la face 28 du prisme de renvoi de l'oculaire qui est en l'occurrence semi-réfléchissante. Le prisme 27 est de préférence un demi prisme de Porro de deuxième espèce, ce qui permet de rabattre sur un côté le dispositif 26. Les symboles sont ainsi collimatés par exemple à deux mètres pour la voie de nuit. Ces informations sont rendues visibles également en observation de jour, du fait que le deuxième réflecteur de sortie 9 est placé, en position active, exactement derrière l'oculaire coudé 14, au moyen d'un prisme 29, de la hauteur de la lentille d'oeil du bioculaire, collé sur la face en l'occurrence semi-réfléchissante 19 du prisme 9 de façon à former une lame à faces parallèles. La face 30 du prisme 29 est de préférence un dioptre sphérique correcteur de faible courbure qui collimate les symboles à l'infini. Il est ainsi possible, de jour comme de nuit, de faire apparaître, en période utile, en superposition du paysage mais sans occultation de celui-ci, les ordres de conduites émanant du chef de char à supposer que le véhicule, blindé en l'occurrence, soit un char de combat. Ces ordres de conduite sont visibles de préférence vers le bas du champ pour libérer l'axe principal du regard, à une distance de 2 mètres en voie de nuit et à l'infini en voie de jour.

Les figures 2 et 3 illustrent un mode de réalisation des moyens d'escamotage alternés (premiers et deuxièmes moyens d'escamotage) qui permettent le passage de la position d'observation de jour à la position d'observation de nuit ou réciproquement.

Sur les figures 2a et 2b l'appareil est représenté en position d'observation de jour selon laquelle le deuxième réflecteur de sortie (prisme 9) est en position active et le premier réflecteur d'entrée (prisme 4) en position escamotée. Ces figures représentent aussi les deuxièmes moyens d'escamotage du deuxième réflecteur de sortie. Le prisme 9 est supporté à rotation autour d'un axe 31 perpendiculaire au plan défini par les axes optiques 7 et 11 par des biellettes latérales 32 à une extrémité de ces dernières. Les biellettes 32 sont constituées chacune de deux segments articulés l'un par rapport à l'autre en rotation et qui sont soumis à une force de rappel permanente exercée par un ressort de rappel à deux positions d'équilibre fonctionnant en traction, symbolisé en 33, ce qui rend les biellettes extensibles. On obtient ainsi pour les biellettes 32 deux positions d'équilibre, une position repliée représentée aux figures 2 et 3 et une position en extension non représentée qui permet le passage du prisme 9 sous le bioculaire 14. L'autre extrémité des biellettes 32 est supportée à rotation dans le boîtier 1 au moyen de tourillons 34, dont l'axe est parallèle à l'axe 31. Pour passer à la position d'observation de nuit l'observateur exerce manuellement un mouvement de traction longitudinal vers l'arrière sur le prisme 9, puis un mouvement de rotation d'environ 180° sous le bioculaire 14, qui fait passer le prisme 9 à sa position escamotée pour l'observation de nuit représentée à la figure 3a. Ce mouvement déclenche des premiers moyens d'escamotage du prisme 4 non représentés permettant de faire passer ce dernier de sa position escamotée à sa position active représentée aux figures 3a et 3b selon un mouvement de rotation de 90° dans un plan perpendiculaire au plan des axes optiques 7 et 11, le prisme 4 étant monté sur un support 35 articulé, au moyen de bras 36, sur l'objectif 12 de la voie de nuit. Les premiers moyens sont par exemple constitués par un câble gainé, entraîné par une roue solidaire de l'arbre 34, câble dont une extrémité est reliée au support 35. L'enroulement du câble autour de la roue provoque, contre l'action d'un ressort de rappel, le mouvement du prisme 4 vers sa position active qui est obtenue lorsque le prisme 4 est en portée contre une butée de calage en position active. Le mouvement inverse pour le passage à la position escamotée du prisme 4 s'obtient par déroulement du câble de la roue et action concomitante du ressort de rappel. Pour le passage à la position d'observation de jour, tous les mouvements décrits ci-dessus pour les prismes 9 et 4 sont inversés. De préférence, le mouvement du prisme 9 commande aussi' par action sur des microcontacts électriques l'allumage, respectivement l'extinction du tube intensificateur de lumière.

## Revendications

1. Appareil d'observation mixte jour-nuit pour véhicule, contenu dans un boîtier unique (1), comportant un premier réflecteur d'entrée mobile (4) respectivement un deuxième réflecteur d'entrée (5) pour dévier les rayons lumineux d'entrée issus du champ de vision (6) dans la direction de l'axe optique de la voie de nuit (11) respectivement de la voie de jour (7), la voie de nuit étant constituée par un objectif (12), un tube intensificateur de lumière (13) et un oculaire coudé (14), la voie de jour étant constituée par un système optique de grossissement 1 comportant au moins un deuxième réflecteur de sortie (9), caractérisé en ce que les axes optiques de la voie de jour (7) et de la voie de nuit (11) s'étendent dans un même plan parallèle à un axe longitudinal (15) dudit véhicule, et que ledit premier réflecteur d'entrée (4) ainsi que ledit deuxième réflecteur de sortie (9) sont escamotables alternativement par manipulation du deuxième réflecteur de sortie (9) qui comporte des moyens d'escamotage (31 à 34) de façon telle que pour l'observation de nuit ledit premier réflecteur d'entrée (4) soit, en position active, situé devant ledit deuxième réflecteur d'entrée (5), le deuxième réflecteur de sortie (9) étant en position escamotée, et que pour l'observation de jour ledit deuxième réflecteur de sortie (9) soit, en position active, situé derrière ledit oculaire coudé (14), le premier réflecteur d'entrée (4) étant en position escamotée.

2. Appareil d'observation mixte jour-nuit selon la revendication 1, caractérisé en ce que lesdits axes optiques de la voie de jour (7) et de la voie de nuit (11) sont inclinés l'un vers l'autre vers le haut d'un léger angle (A) de l'ordre de 10 à 20 degrés.

3. Appareil d'observation mixte jour-nuit selon la revendication 1 ou 2, caractérisé en ce que lesdits deuxièmes moyens d'escamotage consistent en des biellettes latérales articulées (32) extensibles au moyen de ressorts (33) qui maintiennent ledit deuxième réflecteur de sortie (9) contre ledit appareil d'observation derrière l'oculaire (14) en position active, respectivement devant l'oculaire (14) en position escamotée, le passage de l'une à l'autre de ces deux positions stables s'effectuant selon un mouvement longitudinal de traction puis de rotation d'environ 180° en dessous dudit oculaire (14).

4. Appareil d'observation mixte jour-nuit selon l'une des revendications 1 à 3, caractérisé en ce qu'il comporte des moyens d'obturation automatique de la voie de jour consistant en un volet d'étanchéité (22) articulé sur ledit boîtier (1) et sollicité par un ressort (24) hors du trajet des rayons lumineux lorsque ledit deuxième réflecteur de sortie est en position active et perpendiculairement audit axe optique (7) de la voie de jour dans le trajet du rayonnement lumineux lorsque ledit deuxième réflecteur de sortie (9) est en position escamotée.

5. Appareil d'observation mixte jour-nuit selon l'une des revendications 1 à 4, caractérisé en ce que lesdits réflecteurs (4, 5, 9) sont constitués par des prismes à section triangulaire et que la partie dudit système optique qui s'étend le long de l'axe optique de la voie de jour est constitué par un prisme (18) de forme parallélépipédique.

6. Appareil d'observation mixte jour-nuit selon l'une des revendications 1 à 5, caractérisé en ce que la voie de nuit (11, 4, 12, 13, 14) est manoeuvrable selon un mouvement de rotation autour de son axe optique vertical (11), limité à quelques dizaines de degrés de part et d'autre d'une position frontale médiane, et qu'à cet effet elle est montée à rotation dans le corps et comporte un levier de manoeuvre (25).

7. Appareil d'observation mixte jour-nuit pour véhicule blindé selon l'une des revendications 1 á 6, caractérisé en ce que ledit oculaire coudé (14) ainsi que le deuxième réflecteur de sortie (9) comportent chacun un prisme à face semi-réfléchissante (28, 19) et que ledit appareil comporte un dispositif (26) de visualisation d'ordres de conduite dudit véhicule blindé intégré audit oculaire coudé (14), commun aux voies de jour et de nuit, constitué par un ensemble de diodes électroluminescentes (26) définissant les symboles d'ordres de conduite, ledit ensemble étant situé dans un plan conjugué du plan focal de l'oculaire, l'injection dans le champ de l'oculaire étant réalisée au moyen d'un prisme (27) collé sur la face semi-réfléchissante (28) du prisme de renvoi dudit oculaire et au moyen d'un prisme de section triangulaire (29) collé sur la face semi-réfléchissante (19) du prisme qui constitue ledit deuxième réflecteur de sortie (9).

8. Appareil d'observation mixte jour-nuit selon l'une des revendications 1 à 7, caractérisé en ce qu'il est un épiscope à grand champ horizontal destiné à la conduite d'un char de combat, épiscope pour lequel la vision est bioculaire de jour et de nuit.

## Patentansprüche

1. Tag/Nachtsichtgerät für Fahrzeuge, wobei das Gerät in einem einfachen Gehäuse (1) angeordnet ist, das einen ersten beweglichen Eingangsreflektor (4) und einen zweiten Eingangsreflektor (5) enthält, die dafür sorgen, daß die Eingangslichtstrahlen aus dem Sehfeld (6) in Richtung der optischen Achse des Nachtganges (11) bzw. des Tagesganges (7) gelenkt werden, wobei der Nachtgang durch ein Objektiv (12), eine Lichtverstärkerröhre (13) und ein gebogenes Okular (14) gebildet und der Tagesgang durch ein optisches System mit einer Vergrößerung 1 gebildet werden, das wenigstens einen zweiten Ausgangsreflektor (9) enthält, *dadurch gekennzeichnet*, daß die optischen Achsen des Tagesganges (7) und des Nachtganges (11) sich in derselben Ebene parallel zu einer Längsachse (15) des Fahrzeugs erstrecken, und daß der erste Eingangsreflektor (4) und der zweite Ausgangsreflektor (9) durch Handhabung des zweiten Ausgangsreflektors (9) abwechselnd einziehbar sind, der Einziehmittel (31 - 34) derart enthält, daß zum Nachtsehen der erste Eingangsreflektor (4) vor dem zweiten Eingangsreflektor (5) in die aktive Stellung gebracht wird, wobei der zweite Ausgangsreflektor (9) sich in der eingezogenen Stellung befindet, während zum Tagessehen der zweite Ausgangsreflektor (9) hinter dem gebogenen Okular (14) in die aktive Stellung gebracht wird, wobei der erste Eingangsreflektor (4) sich in der eingezogenen Stellung befindet.

2. Tag/Nachtsichtgerät nach Anspruch 1 *dadurch gekennzeichnet*, daß die optischen Achsen des Nachtganges (11) und des Tagesganges (7) nach oben hin gegeneinander unter einem Spitzenwinkel (A) in der Größenordnung von 10 bis 20° gebogen sind.

3. Tag/Nachtsichtgerät nach Anspruch 1 oder 2, *dadurch gekennzeichnet*, daß die zweiten Einziehmittel aus seitlich angebrachten, gelenkigen und durch Federn (33) ausziehbaren Stangen (32) bestehen, wobei diese Federn den zweiten Ausgangsreflektor (9) gegen das Sichtgerät hinter dem Okular (14) in der aktiven Stellung und vor dem Okular (14) in der eingezogenen Stellung festhält, wobei der Eintritt von der einen in die andere dieser beiden stabilen Stellungen durch eine longitudinale Ziehbewegung gefolgt von einer Drehbewegung über 180° unter dem Okular (14) erfolgt.

4. Tag/Nachtsichtgerät nach Anspruch 1 bis 3, *dadurch gekennzeichnet*, daß darin automatische Verschlußmittel des Tagesganges vorgesehen sind, die aus einer geschlossenen Klappe (22) besteht, die gelenkig am Gehäuse (1) befestigt ist und von einer Feder (24) aus dem Lichtstrahlweg herausgezogen wird, wenn der zweite Ausgangsreflektor sich in der aktiven Stellung und sich senkrecht zur optischen Achse (7) des Tagesweges im Lichtstrahlweg befindet, wenn der zweite Ausgangsreflektor (9) die eingezogene Stellung einnimmt.

5. Tag/Nachtsichtgerät nach einem der Ansprüche 1 bis 4, *dadurch gekennzeichnet*, daß die Reflektoren (4, 5, 9) aus Prismen mit Dreieckquerschnitt bestehen, und daß der Teil des sich entlang der optischen Achse des Tagesganges erstreckenden optischen Systems durch ein Prisma (18) in Form eines Quaders gebildet wird.

6. Tag/Nachtsichtgerät nach einem der Ansprüche 1 bis 5, *dadurch gekennzeichnet*, daß der Nachtgang (11, 4, 12, 13, 14) durch eine Drehbewegung um seine vertikale optische Achse (11) bis zu einigen Zehntel Grad an jeder Seite einer mittlern Vorderstellung bedienbar, dazu im Körper drehbar angeordnet ist und einen Bedienhebel (25) enthält.

7. Tag/Nachtsichtgerät nach einem der Ansprüche 1 bis 6, *dadurch gekennzeichnet* daß das gebogene Okular (14) und der zweite Ausgangsreflektor (9) je ein Prisma mit einer halbreflektierenden Oberfläche (28, 29) enthalten, und daß das Gerät eine Einrichtung (26) zur Visualisierung von Fahrbefehlen für den blindierten Kraftwagen in Kombination mit dem gebogenen Okular (14) gemeinsam für die Tages- und Nachtgänge enthält, die durch ein Gefüge von lichtemittierenden Dioden (26) gebildet wird, die die Symbole der Fahrbefehle definieren, wobei das Gefüge sich in einer Ebene konjugiert mit der Brennfläche des Okulars befindet, wobei die Einspeisung in das Feld des Okulars mittels eines Prismas (27) erfolgt, das mit der halbreflektierenden Oberfläche (28) des Rückkehrprismas des genannten Okulars verklebt ist, und mittels eines Prismas mit Dreieckquerschnitt (29) verwirklicht wird, das mit der halbreflektierenden Oberfläche (19) des Prismas verklebt ist, das den zweiten Ausgangsreflektor (9) darstellt.

8. Tag/Nachtsichtgerät nach einem der Ansprüche 1 bis 7, *dadurch gekennzeichnet*, daß es ein Episkop mit einem weiten horizontalen Feld zur Verwendung in einem Panzer ist, wobei für das Episkop das Sichtmittel sowohl tagsüber als auch nachtsüber zweiäugig ist.

**Claims**

1. A combined night/day viewing apparatus for armoured vehicles contained in a single housing (1) comprising a first movable input reflector (4) and a second input reflector (5), respectively, for causing the input light beams originating from the field (6) of view to deviate in the direction of the optical axes of the night path (11) and of the day path (7), respectively, the night path being constituted by an objective (12), a light intensifier tube (13) and a bent ocular (14) and the day path being constituted by an optical system having an enlargement 1 comprising at least one second output reflector (9), characterized in that the optical axes of the day path (7) and of the night path (11) extend in the same plane parallel to a longitudinal axis (15) of the said vehicle, and in that the said first input reflector (4) and the said second output reflector (9) are concealable alternately by manipulation of the second output reflector (9), which comprises concealing means (31 to 34) such that for viewing by night the said first input reflector (4) is situated in the active position before the said second input reflector (5), the second output reflector (9) being in the concealed position, while for viewing by day the said second output reflector (9) is situated in the active position behind the said bent ocular (14), the first input reflector (4) being in the concealed position.

2. A combined night/day viewing apparatus as claimed in Claim 1, characterized in that the said optical axes of the night path (11) and of the day path (7) are inclined with respect to each other upwards at a small angle (A) of the order of 10 to 20 degrees.

3. A combined night/day viewing apparatus as claimed in Claim 1 or 2, characterized in that the said second concealing means consist of lateral rods (32) hinged and extensible by means of springs (33) which hold the said second output reflector (9) against the said viewing apparatus behind the ocular (14) in the active position and before the ocular (14) in the concealed position, respectively, the passage from one to the other of these two stable positions being effected by a longitudinal traction movement and then a rotary movement of about 180° under the said ocular (14).

13

4. A combined night/day viewing apparatus as claimed in any one of Claims 1 to 3, characterized in that it comprises automatic obturation means of the day path consisting of a tight shutter (22) hinged on the said housing (1) and pulled by a spring (24) out of the path of the light beams when the said second output reflector is in the active position and at right angles to the said optical axis (7) of the day path into the path of the light beam when the second output reflector (9) is in the concealed position.

5. A combined night/day viewing apparatus as claimed in any one of Claims 1 to 4, characterized in that the said reflectors (4, 5, 9) are constituted by prisms of triangular cross-section and in that the part of the said optical system extending along the optical axis of the day path is constituted by a prism (18) in the form of a parallelipipedon.

6. A combined night/day viewing apparatus, as claimed in any one of Claims 1 to 5, characterized in that night path (11, 4, 12, 13, 14) can be manoeuvered by a rotary movement about its vertical optical axis (11) limited to a few tens of degrees on either side of a medium front position and for this purpose it is rotatably mounted in the body and comprises a manoeuvering lever (25).

7. A combined night/day viewing apparatus for an armoured vehicle as claimed in any one of Claims 1 to 6, characterized in that the said bent ocular (14) and the second output reflector (9) each comprise a prism having a semi-reflecting surface (28, 19) and in that the said apparatus comprises a devie (26) for visualizing orders for driving the said armourd vehicle integral with the said bent ocular (14) common to the day and night paths constituted by an assembly of light-emitting diodes (26) defining the symbols of driving orders, the said assembly being situated in a plane conjugate with the focal plane of the ocular, the injection into the field of the ocular being realized by means of a prism (27) glued to the semi-reflecting surface (28) of the return prism of the said ocular and by means of a prism of triangular cross-section (29) glued to the semi-reflecting surface (19) of the prism constituting the said second output reflector (9).

8. A combined night/day viewing apparatus as claimed in any one of Claims 1 to 7, characterized in that it is an episcope having a large horizontal field intended for driving a tank, for which episcope the vision is binocular both by day and by night.

FIG.1

FIG.2a

FIG.2b

FIG.3a

FIG.3b